# EUROPÄISCHE PATENTANMELDUNG

(11) **EP 2 775 249 A2**
(43) Veröffentlichungstag der Anmeldung: **10.09.2014**
(21) Anmeldenummer: 13005942.1
(22) Anmeldetag: 19.12.2013
(51) Int. Cl.: F28F 11/02

(54) **Verfahren zum Verschluss von Durchtrittsöffnungen in Sammlern, Verschlusselement sowie Presse zur Durchführung des Verfahrens**

(30) Priorität: 08.03.2013 DE 102013004045
(71) Anmelder: Balcke-Dürr GmbH, 40882 Ratingen (DE)
(72) Erfinder: Robrecht, Ralf, 40885 Ratingen (DE); Grobelny, Hans-Günter, 44623 Herne (DE)
(74) Vertreter: Heidler, Philipp

(57) **Zusammenfassung**

Die Erfindung betrifft ein Verfahren zum Verschluss von Durchtrittsöffnungen (4), die einen Sammler mit Rohren verbinden und durch die ein Strömungsmedium hindurch tritt, umfassend das Eindrücken eines Verschlusselementes (2) in den Innenraum der Durchtrittsöffnung (4), eine druckbedingte plastische Verformung des Wandmaterials der Durchtrittsöffnung (4) um das Verschlusselement (2), die zu einem dichten Formschluss zwischen Verschlusselement (2) und dem Wandmaterial der Durchtrittsöffnung (4) führt, wobei eine Ringwulst (5, 6) in Eindrückrichtung vor dem Verschlusselement (2) gebildet wird, und ferner plastisch verformtes Material entgegen der Eindrückrichtung zurück fließt und eine Ringwulst (5, 6) auf der entgegen der Eindrückrichtung gelegenen Seite des Verschlusselements (2) gebildet wird, wodurch insgesamt eine Ringnut (7) entsteht, die das Verschlusselement (2) in der Durchtrittsöffnung (4) fixiert. Die Erfindung betrifft ferner ein Verschlusselement (2) zum Verschluss von Durchtrittsöffnungen (4) und eine Presse (8, 17) zur Durchführung des Verfahrens.

## Beschreibung

Die Erfindung betrifft ein Verfahren zum Verschluss von Durchtrittsöffnungen, die einen Sammler mit Rohren verbinden und durch die ein Strömungsmedium hindurchtritt, umfassend das Eindrücken eines Verschlusselementes, dessen größter Durchmesser größer ist als der Innendurchmesser der zu verschließenden Durchtrittsöffnung, von außerhalb der Durchtrittsöffnung in den Innenraum der Durchtrittsöffnung und eine druckbedingte plastische Verformung des Wandmaterials der Durchtrittsöffnung um das Verschlusselement, die zu einem dichten Formschluss zwischen Verschlusselement und dem Wandmaterial der Durchtrittsöffnung führt. Die Erfindung betrifft ferner ein Verschlusselement zum Verschluss dieser Durchtrittsöffnungen und eine Presse zum Eindrücken von Verschlusselementen in Durchtrittsöffnungen gemäß dem Verfahren.

Anwendungsgebiet der Erfindung sind Reparatur- und Instandhaltungsarbeiten von Wärmetauschern, insbesondere bei Kraftwerken mit Hochdruck-Vorwärmern oder Kesseln, die zur Erhitzung oder Verdampfung eines Strömungsmediums eingesetzt werden. Solche Wärmetauscher verfügen über eine Vielzahl von Rohren, die zwischen zwei Sammlern (einem Ein- und einem Austrittssammler) angeordnet sind. Die Rohre werden dabei zur Erhitzung und/oder Verdampfung des Strömungsmediums mit Wärmeenergie beaufschlagt. Es kann vorkommen, dass einzelne oder mehrere Rohre zwischen den Sammlern eine Leckage entwickeln und undicht werden. Schon der Defekt von einzelnen Rohren führt dabei zu höherem Dampfverbrauch bzw. Druckverlust im Gesamtsystem. Um die Leistung und damit die Wirtschaftlichkeit des Wärmetauschers zu erhalten, ist es notwendig, diesen Dampf- und Druckverlust durch Verschluss der betroffenen Rohre möglichst rasch zu beenden.

Um die Durchtrittsöffnungen, die von den Sammlern zu den Rohren führen, zu verschließen, werden im Stand der Technik meist Metallkegel eingesetzt. Im Falle von nicht kreisrunden Durchtrittsöffnungen müssen diese vor dem Einsetzen des Kegels entsprechend nachbearbeitet werden. Allerdings gestaltet sich das gerade Ansetzen des Kegels auch bei kreisrunden Durchtrittsöffnungen oftmals als schwierig. Die Auflagefläche des Kegels am Wandmaterial der Durchtrittsöffnung ist kreisrund und sehr dünn, was es notwendig macht, die Kegel zusätzlich in der Durchtrittsöffnung zu verschweißen. Dieser gesamte Vorgang ist zeitaufwändig und aufgrund der Platzverhältnisse in den Sammlern, die oftmals sehr beengt sind, zusätzlich erschwert.

Entsprechend ist es Aufgabe der Erfindung, ein Verfahren der eingangs genannten Art anzugeben, das ohne Erhitzen oder Schweißen auskommt, kostengünstig ist und schneller durchzuführen ist als herkömmliche Verfahren. Ferner ist es Aufgabe der Erfindung, ein Verschlusselement anzugeben, mit dem das Verfahren durchführbar ist, und das eine größere Anlagefläche mit der Durchtrittsöffnungswand bildet als herkömmliche Kegel, was zur sicheren Abdichtung der Durchtrittsöffnung führt. Zusätzlich wird eine Presse angegeben, mit der das Verschlusselement in die zu verschließende Durchtrittsöffnung eingedrückt werden kann.

Die Lösung der Aufgabe gelingt mit einem Verfahren, in dem ein Verschlusselement eingesetzt wird, das an seiner bezüglich der Durchtrittsöffnungsinnenseite gerichteten Seite an der Stelle des größten Durchmessers eine Rundung aufweist und in dem mindestens ein derartiges Verschlusselement in der Weise in den Innenraum der Durchtrittsöffnung hineingedrückt wird, dass diese Stelle des größten Durchmessers des Verschlusselementes in das Durchtrittsöffnungsinnere hinein gelangt, und dass die plastische Verformung des Materials am Durchtrittsöffnungsinnenmantel durch den Vorschub des Verschlusselementes entsteht, wobei eine Ringwulst in Eindrückrichtung vor dem Verschlusselement gebildet wird, und ferner plastisch verformtes Material entgegen der Eindrückrichtung zurückfließt und eine Ringwulst auf der entgegen der Eindrückrichtung gelegenen Seite des Verschlusselements gebildet wird, wodurch insgesamt eine Ringnut entsteht, die das Verschlusselement in der Durchtrittsöffnung fixiert. Durch die plastische Verformung der Durchtrittsöffnungswand und die Bildung der Ringnut wird eine besonders breite Anlagefläche zwischen Verschlusselement und Durchtrittsöffnungswand erreicht, die im Endeffekt eine besonders zuverlässige Abdichtung der Durchtrittsöffnung bewirkt. Die Lösung gelingt ferner mit einem entsprechenden Verschlusselement und einer entsprechenden Presse zum Eindrücken von Verschlusselementen in Durchtrittsöffnungen gemäß dem Verfahren. Bevorzugte Weiterbildungen sind in den jeweiligen abhängigen Ansprüchen angegeben.

Um das Positionieren des Verschlusselementes und der Presse an der zu verschließenden Durchtrittsöffnung zu erleichtern, kann das Verschlusselement mit einer federnden Vorspannung versehen werden, und es in der Art und Weise an der Innenfläche des Sammlers entlang geführt werden, dass es bei Erreichen der Durchtrittsöffnung eine federnde Auslenkung erfährt. Ein federnd vorgespanntes Verschlusselement wird also von der Federspannung an die Innenfläche eines Sammlers gedrückt und von einer bedienenden Person manuell oder mittels Hilfsvorrichtungen an dieser entlang geführt. Sobald das Verschlusselement die zu verschließende Durchtrittsöffnung erreicht hat, wird es durch die Federspannung so weit in die Durchtrittsöffnung hineingedrückt, bis es durch sein Übermaß an den Rändern der Durchtrittsöffnung anschlägt. Diese wenige Millimeter umfassende Auslenkung des Verschlusselementes wird vom Bediener wahrgenommen und als Zeichen dafür interpretiert, dass das Verschlusselement die zu verschließende Durchtrittsöffnung erreicht hat. So kann, ohne viel Zeit auf eine korrekte Positionierung des Verschlusselementes aufzuwenden, mit den nächsten Schritt des Verfahrens begonnen werden.

Ein weiterer Vorteil wird dadurch erreicht, dass das Verschlusselement nur so weit in die Durchtrittsöffnung eingedrückt wird, dass es noch teilweise aus dieser übersteht, so dass es aus einem Blickwinkel orthogonal zur Eindrückrichtung leicht gesichtet werden kann. Da die Sammler der Wärmetauscher leicht zugänglich oder sogar begehbar sind, ist es von Vorteil, wenn die Verschlusselement noch leicht aus den Durchtrittsöffnungen überstehen. So können die Verschlusselemente von einer Person, die z.B. mit einer Taschenlampe oder einer anderen Lichtquelle in den Sammler hineinleuchtet, gesehen werden. Der Blickwinkel der Person ist dabei um ungefähr 90° zur Eindrückrichtung des Verschlusselementes versetzt, so dass die Verschlusselemente über die Innenfläche des Sammlers herausragen müssen. Auf diese Weise lassen sich leicht die verschlossenen Rohre eines Sammlers sichten und/oder zählen.

Sollte es erforderlich sein, ist es auch möglich, dass mehr als ein Verschlusselement in die zu verschließende Durchtrittsöffnung eingedrückt wird, wobei die Verschlusselemente in Eindrückrichtung hintereinander angeordnet werden. Durch eine einfache Wiederholung der Verfahrensschritte kann ein zweites Verschlusselement in die selbe Durchtrittsöffnung vom selben Sammler aus eingedrückt werden. Prinzipiell lassen sich so beliebig viele Verschlusselemente in Eindrückrichtung hintereinander in eine Durchtrittsöffnung einbringen, so lange die erfindungsgemäße Presse den erforderlichen Druck aufbringen kann. Auf diese Art und Weise lässt sich ein besonders dichter Verschluss einer Durchtrittsöffnung unter Anwendung der selben Arbeits- und Verfahrensschritte erreichen.

Ein erfindungsgemäßes Verschlusselement zur Durchführung des Verfahrens weist an seiner bezüglich der Durchtrittsöffnungsinnenseite gerichteten Seite an der Stelle des größten Durchmessers eine Rundung auf. Diese Rundung bedingt die oben beschriebene Bildung der Ringnut, also der Ringwülste und der dazwischen liegenden Vertiefung, während des Eindrückens des Verschlusselementes in eine zu verschließende Durchtrittsöffnung. Ebenso ist die Rundung wichtig für die Ausbildung der abdichtenden Verbindung zwischen Verschlusselement und Ringnut.

Im Idealfall ist das Verschlusselement rotationssymmetrisch. Beim Eindrücken eines solchen Verschlusselementes entlang seiner Rotationsachse in eine zu verschließende Durchtrittsöffnung sorgt die Rotationssymmetrie zusammen mit dem größeren Durchmesser des Verschlusselementes als der Durchtrittsöffnung zu einem besonders engen Anliegen der durch die plastische Verformung gebildeten Ringnut am Verschlusselement und damit zu einem besonders verlässlichen Abdichten der Durchtrittsöffnung. Im Gegensatz zum herkömmlichen Verschließen der Durchtrittsöffnungen mittels Kegeln ist es beim erfindungsgemäßen Verschlusselement nicht notwendig, dass die Durchtrittsöffnungen exakt kreisrunde Formen aufweisen.

Als besonders vorteilhaft für die Bildung der Ringnut hat sich ein Verhältnis des Durchmessers des Verschlusselementes zum Durchmesser der Durchtrittsöffnung zwischen 1,033 und 1,125, vorzugsweise zwischen 1,045 und 1,083 herausgestellt. Praktisch bedeutet dies, dass bei Durchtrittsöffnungen, die einen Durchmesser zwischen 16 und 24 mm besitzen, das Verschlusselement einen Durchmesser haben sollte, der zwischen 0,8 und 2 mm größer ist als derjenige der Durchtrittsöffnung. So liegt das Verhältnis des Durchmessers des Verschlusselementes zum Durchmesser der Durchtrittsöffnung bei einem Durchmesser der Durchtrittsöffnung von 18 mm und einem Durchmesser des Verschlusselementes von 19 mm bei 1,056. Beim selben Durchmesser der Durchtrittsöffnung und einem Durchmesser des Verschlusselementes von 19,5 mm ergibt sich ein Verhältnis von 1,083. Bei einem Durchmesser der Durchtrittsöffnung von 20 mm und einem Durchmesser des Verschlusselementes von 21 mm ergibt sich ein Verhältnis von 1,050. Bei dem selben Durchmesser der Durchtrittsöffnung und einem Durchmesser des Verschlusselementes von 21,5 mm ist das Verhältnis 1,075. Bei einem Durchmesser der Durchtrittsöffnung von 22 mm und einem Durchmesser des Verschlusselementes von 23 mm ist das Verhältnis 1,045 und bei den selben Durchmesser der Durchtrittsöffnung und einem Verschlusselementdurchmesser von 23,5 mm liegt das Verhältnis bei 1,068.

Eine vorteilhafte Weiterbildung des erfindungsgemäßen Verschlusselementes besteht darin, dass es eine Form aufweist, durch die es sich in der Durchtrittsöffnung selbst zentriert. Durch eine Formgebung des Verschlusselementes, die dazu führt, dass sich dieses beim Eindrücken von alleine zur Mitte der Durchtrittsöffnung hin orientiert, wird auf einfache und effektive Weise verhindert, dass sich das Verschlusselement in der Durchtrittsöffnung verkantet und es so zu ungewollten Verformungen des Verschlusselementes und der Durchtrittswand kommt, die womöglich dazu führen, dass die Durchtrittsöffnung nicht dicht verschlossen werden kann. Insbesondere durch das Verkanten des Verschlusselementes in der Durchtrittsöffnung werden die Druckkräfte der Presse nicht in erfindungsgemäßer Weise an den Durchtrittsöffnungsinnenmantel weitergegeben, so dass es zu Schäden am Sammler und an der Presse kommen kann. Durch eine Geometrie des Verschlusselementes, die dazu führt, dass das Verschlusselement beim Eindrücken von sich aus ohne weiteres Zutun im Zentrum der Durchtrittsöffnung verbleibt, oder sich sogar noch zu diesem hin bewegt, wird diese Problematik umgangen.

Als besonders vorteilhaft haben sich kugelförmige, eiförmige oder ellipsoide Verschlusselemente gezeigt. Verschlusselemente dieser Formen lassen sich besonders einfach in die Durchtrittsöffnungen einführen und bis zum gewünschten Grad in diese Eindrücken, ohne zu verkanten. Sie unterstützen die Bildung der Ringnut optimal und führen so zu einer besonders dichten und verlässlichen Lagerung zwischen Verschlusselement und Durchtrittsöffnungswand, was einen strömungsmediumsdichten Verschluss der Durchtrittsöffnung gewährleistet.

Gerade auch im Bezug auf die Ringnutbildung zeigen sich Verschlusselemente besonders effizient, welche die gleiche Härte besitzen wie das Wandmaterial der Durchtrittsöffnung oder härter als dieses sind. Durch Verschlusselemente mit gleich hartem oder härterem Material als das Material der Durchtrittsöffnungswand wird sichergestellt, dass es beim Eindrücken des Verschlusselementes in die Durchtrittsöffnung zu einer plastischen Verformung der Durchtrittsöffnungswand kommt, was essentiell für die Ringnutbildung und damit für die Abdichtung der Durchtrittsöffnung durch das Verschlusselement ist. Wäre das Verschlusselement zu weich, wäre es nicht in der Lage unter dem Druck der Presse das Material der Durchtrittsöffnungswand zu verdrängen, und es würde lediglich zu einer Verformung des Verschlusselementes kommen, durch die sich kein dichtender Verschluss der Durchtrittsöffnung erreichen ließe. Bevorzugte Materialien für das Verschlusselement sind Stahl und gehärteter Stahl.

Eine weitere vorteilhafte Ausführungsform des Verschlusselementes besteht darin, dass es magnetisch zu einer Aufnahme einer Halterung an einer Presse ist und so an dieser gehalten wird. Das Verschlusselement muss vor dem Eindrücken in die Durchtrittsöffnung an der Presse gelagert werden. Wenn diese Lagerung magnetisch verstärkt wird, fällt es dem Bediener einfacher, das Verschlusselement an der Presse so im Sammler zu positionieren, dass das Verschlusselement vor der zu verschließenden Durchtrittsöffnung angeordnet ist und nur noch durch das Aktivieren der Presse in die Durchtrittsöffnung eingedrückt werden muss. Die Durchtrittsöffnungen in den Sammlern sind nicht immer so ausgerichtet, dass das Verschlusselement durch die Gewichtskraft in der Aufnahme der Halterung der Presse gehalten wird. Durch die Magnetisierung des Verschlusselementes im Bezug auf die Aufnahme wird verhindert, dass das Verschlusselement beim Positionieren der Presse aus der Aufnahme heraus fällt. Der Bediener kann sich somit voll auf die Positionierung der Presse konzentrieren, ohne Aufmerksamkeit darauf zu verwenden, ob das Verschlusselement noch in seiner Aufnahme ruht.

Die erfindungsgemäße Presse zum Eindrücken von Verschlusselementen in Durchtrittsöffnungen von Sammlern ist z.B. ein Hydraulikzylinder, der bis zu 700 bar Hydraulikdruck erzeugen kann oder eine elektrische Presse.

Vorteilhaft für den Einsatz im Sammler ist, dass die Presse eine Auflagefläche an einer Stütze umfasst, die gegenüber der Halterung mit der Aufnahme für das Verschlusselement liegt und die eine konvexe Rundung aufweist, die komplementär zu der konkaven Innenfläche des Sammlers ist, die als Gegenlager dient. Die Stütze und ihre Auflagefläche befinden sich also auf der Seite der Presse, die der zu verschließenden Durchtrittsöffnung unmittelbar vor Eindrücken des Verschlusselementes gegenüberliegt. Durch diese komplementäre Form der Anlagefläche der Stütze der Presse kann diese besonders einfach im Sammler positioniert werden und ist auch während des Eindrückens des Verschlusselementes in die zu verschließende Durchtrittsöffnung stabil an der der Durchtrittsöffnung gegenüberliegenden Seite des Sammlers abgestützt. Die stabile Lagerung an der Sammlerinnenseite führt zu einem besonders sicheren Eindrücken des Verschlusselementes in die Durchtrittsöffnung und verhindert, dass die Presse während des Eindrückens wegrutscht und damit nicht nur den Sammler beschädigen kann, sondern auch eine Gefahr für den Bediener darstellt.

Des Weiteren bringt es einen Vorteil mit sich, wenn die Presse durch Anordnung von Verlängerungsstücken verlängerbar ist um den Abstand zwischen der zu verschließenden Durchtrittsöffnung und einer der Durchtrittsöffnung gegenüberliegenden Oberfläche zu überwinden. Durch die Möglichkeit, die Presse im Bedarfsfall zu verlängern, können mit ein und derselben Presse Durchtrittsöffnungen in verschieden großen Sammlern bearbeitet werden. Die Länge der Presse kann dabei direkt vor Ort an die Gegebenheiten angepasst werden, ohne dass großer Planungsaufwand nötig ist. Damit werden nicht nur die Vorgänge vor Ort beschleunigt, sondern auch Kosten eingespart, die durch mehrere Pressen verursacht würden.

Ebenso ist es vorteilhaft, wenn die Presse über einen Wechselhalter verfügt, an dem die Halterung mit der Aufnahme für das Verschlusselement austauschbar angeordnet ist, so dass Halterungen mit unterschiedlichen Aufnahmen für verschiedene Größen des Verschlusselementes an der Presse angebracht werden können. Der Wechselhalter, an dem die Halterung mit der Aufnahme für das Verschlusselement angeordnet ist, befindet sich gegenüber der Stütze, mit der die Presse an der Innenwand des Sammlers abgestützt wird. Dadurch, dass die Presse über einen Wechselhalter verfügt, können verschiedene Halterungen mit verschieden ausgeprägten Aufnahmen für unterschiedliche Verschlusselemente an ein und derselben Presse angebracht werden. So kann, je nach den Gegebenheiten vor Ort, ein passendes Verschlusselement für die zu verschließende Durchtrittsöffnung ausgewählt werden, ohne dass zum Eindrücken der jeweiligen Verschlusselemente verschiedene Pressen mitgeführt werden müssen. Stattdessen kann ein und dieselbe Presse mit den entsprechenden Halterungen, die über die entsprechenden Aufnahmen für die unterschiedlichen Verschlusselemente verfügen, je nach Bedarf ausgestattet werden. Durch einen an der Presse angeordneten Wechselhalter kann dies vor Ort mit wenig Aufwand und in kurzer Zeit geschehen. Im Zusammenspiel mit einer eventuellen Anordnung von Verlängerungsstücken erhält man eine Presse, die in den verschiedensten Sammlergrößen mit den unterschiedlichsten Größen von Durchtrittsöffnungen eingesetzt werden kann.

Noch eine vorteilhafte Weiterbildung der Presse umfasst eine federnde Lagerung für das Verschlusselement, die über einen Anschlag verfügt, der einen vorgegebenen Federweg begrenzt. Durch eine federnde Vorspannung des Verschlusselementes kann dieses wie oben beschrieben zur Detektion einer zu verschließenden Durchtrittsöffnung an der Innenfläche des Sammlers entlang geführt werden, bis es bei Erreichen der Durchtrittsöffnung federnd ausgelenkt wird. Die federnde Lagerung kann dabei sowohl zwischen der Halterung mit der Aufnahme für das Verschlusselement und dem Verschlusselement selbst, oder zwischen der Halterung mit der Aufnahme für das Verschlusselement und dem entgegen der Eindrückrichtung nächst gelegenen Teil der Presse, sei es ein Verlängerungsstück oder ein anderes Teil der Presse, angeordnet sein. Wichtig ist, dass die federnde Lagerung über einen Anschlag verfügt, der einen vorgegebenen Federweg begrenzt. Damit wird verhindert, dass die Feder beim Eindrücken des Verschlusselementes in die zu verschließende Durchtrittsöffnung über den vorgegebenen Federweg hinausgehend komprimiert wird, was zur Beschädigung der Feder führen würde. Durch die Anschläge werden Druckkräfte auf das Gehäuse der Presse übertragen und eine übermäßige Komprimierung der Feder verhindert.

Wie oben beschrieben, bringt es Vorteile mit sich, wenn das Verschlusselement magnetisch in der Aufnahe der Halterung der Presse gehalten wird. Dies ist nicht nur dadurch möglich, dass das Verschlusselement selbst magnetisch für die Aufnahme ist, sondern auch dadurch, dass an der Aufnahme oder an der Halterung ein Magnet angeordnet ist, der das Verschlusselement in der Aufnahme der Halterung der Presse hält. Eine Anordnung des Magneten an der Aufnahme oder der Halterung für das Verschlusselement ist unter Umständen billiger, als jedes einzelne Verschlusselement zu magnetisieren.

Die Erfindung wird nachstehend anhand der in den Figuren angegebenen Ausführungsbeispiele weiter beschrieben. Es zeigen schematisch:
- Fig. 1: einen Längsschnitt durch eine gemäß dem Verfahren verschlossene Durchtrittsöffnung, in die ein kugelförmiges Verschlusselement eingedrückt wurde;
- Fig. 2: einen Querschnitt durch einen Sammler mit einer Durchtrittsöffnung und einer Presse;
- Fig. 3: einen Querschnitt durch einen Sammler mit einer Durchtrittsöffnung und einer weiteren Presse;
- Fig. 4: einen Schnitt durch ein kugelförmiges Verschlusselement;
- Fig. 5: einen Längsschnitt entlang der Rotationsachse eines eiförmigen Verschlusselementes; und
- Fig. 6: einen Längsschnitt entlang einer Rotationsachse eines ellipsoiden Verschlusselementes.

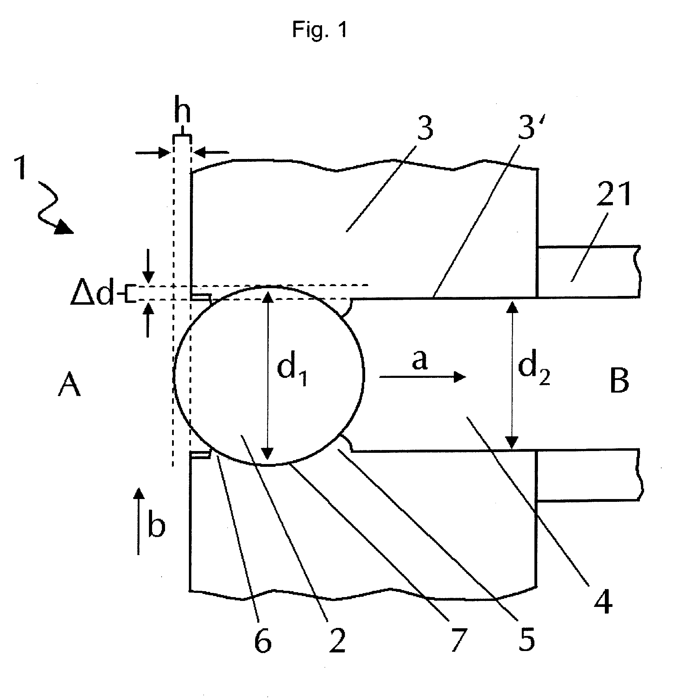

Figur 1 zeigt eine Detailansicht einer zylinderförmigen Durchtrittsöffnung 4 in der Wand 3 eines Sammlers. Die Durchtrittsöffnung 4 verbindet die Sammlerinnenseite A mit der Rohrinnenseite B eines an den Sammler angeschlossenen Rohres 21, an dem eine Leckage (nicht dargestellt) vorliegt. Um zu verhindern, dass ein Fluid, z.B. Dampf, von der Sammlerinnenseite A zur Rohrinnenseite B gelangt und damit durch die Leckage entweichen kann, ist die Durchtrittsöffnung 4 verschlossen. Figur 1 zeigt ferner einen Durchtrittsöffnungsverschluss 1, der durch das Eindrücken einer als Verschlusselement 2 ausgebildeten Kugel in eine Durchtrittsöffnung 4 entlang der Eindrückrichtung a und der daraus resultierenden Verformung des Durchtrittsöffnungsinnenmantels 3' erreicht wird. Die Durchtrittsöffnung 4 ist durch das Verschlusselement 2 abgedichtet. Der größte Durchmesser d₁ des Verschlusselementes 2 ist dabei genau um Δd größer als der Innendurchmesser d₂ der Durchtrittsöffnung 4. Das Verschlusselement 2 wurde dabei so weit in Eindrückrichtung a in die Durchtrittsöffnung 4 eingedrückt, dass es noch um den Überstand h aus der Durchtrittsöffnung 4 herausragt. Dadurch ist es möglich, das Verschlusselement 2 aus einer Blickrichtung b orthogonal zur Eindrückrichtung a bei einem Blick in den Sammler zu sichten, und so die Anzahl und die Position der verschlossenen Durchtrittsöffnungen festzustellen.

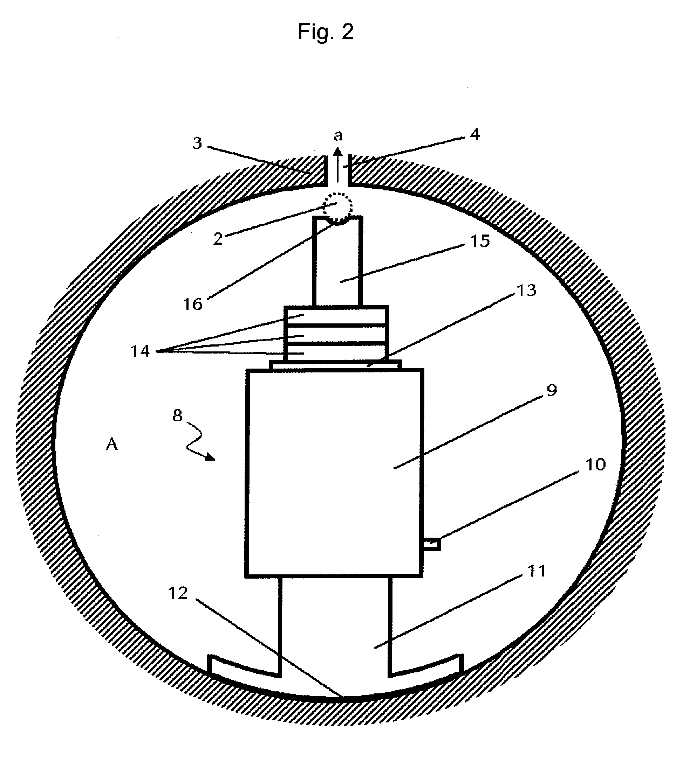

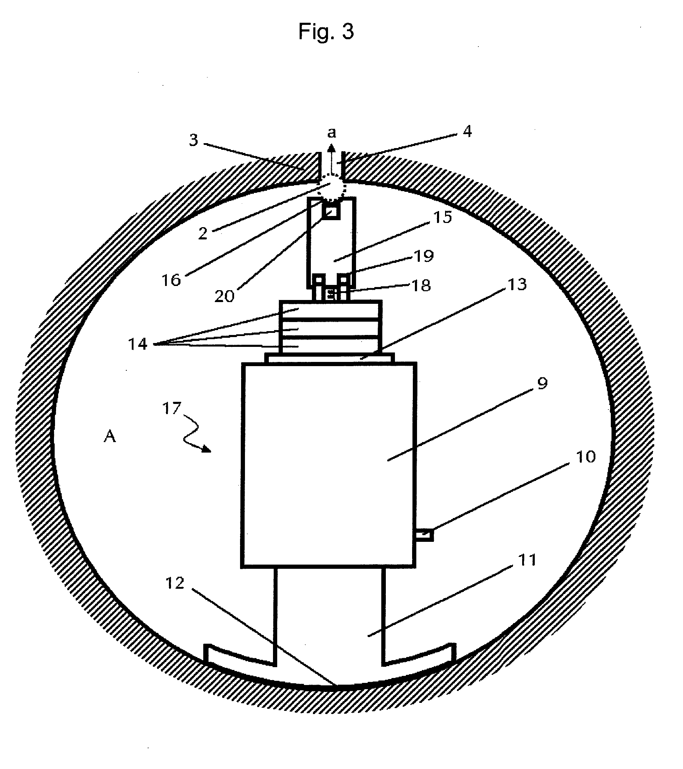

Das Eindrücken des Verschlusselementes 2 gemäß den Figuren 2 und 3 und die daraus resultierende Verformung der Durchtrittsöffnungswand 3 resultieren in einer Abdichtung des Rohres 21 gemäß Figur 1. Hierbei werden durch die Presse 8, 17 Drücke von 10 bis 30 Tonnen auf das Verschlusselement 2 ausgeübt. Dieser Druck wird von der Innenseite A des Sammlers aus entlang der Längsachse der Durchtrittsöffnung 4 in Richtung des an die Durchtrittsöffnung 4 angeschlossenen Rohres 21 ausgeübt. Die Wirkungsachse des Druckes der Presse 8, 17 lässt sich also von der Presse 8, 17 durch das Verschlusselement 2 und den Hohlraum der Durchtrittsöffnung 4 bis in den Hohlraum des daran angeschlossenen Rohres 21 hindurch legen. Das Verschlusselement 2 bewegt sich entsprechend des angelegten Druckes in der Eindrückrichtung a in die Durchtrittsöffnung 4 hinein, in der sich im Normalbetrieb des Wärmetauschers im Falle eines Eintrittsammlers das Strömungsmedium vom Sammler in das an den Sammler über die Durchtrittsöffnung 4 angeschlossene Rohr 21 bewegt. Bei einem Austrittssammler bewegt sich das Verschlusselement 2 entsprechend entgegen der Fließrichtung des Strömungsmediums im Normalbetrieb.

Während des Eindrückens des Verschlusselementes 2 kommt es zu einer Kraftübertragung von einer Presse 8, 17 auf das Verschlusselement 2 und, bedingt durch das Übermaß Δd des Verschlusselementes 2, von diesem auf die Durchtrittsöffnungswand 3. Dadurch entsteht eine Zone plastischen Materialzustandes am Durchtrittsöffnungsinnenmantel 3'. Es kommt zu einer plastischen Verformung des Materials der Durchtrittsöffnungswand 3. Die Durchtrittsöffnungswand 3 wird mit anderen Worten durch das Anlagen des Druckes und das Eindrücken des Verschlusselementes 2 in einen plastischen Materialzustand versetzt. Dieser Vorgang ähnelt dem Kaltschweißen. Der Druck, den die Presse 8, 17 auf das Verschlusselement 2 ausübt, wird durch dessen Übermaß Δd auf das Material der Durchtrittsöffnungswand 3, das direkt in Wirkkontakt mit dem Verschlusselement 2 steht, übertragen, wodurch das Material der Durchtrittsöffnungswand 3 in einen plastischen Materialzustand übergeht.

Bedingt durch die Form des Verschlusselementes 2 wird plastisches Material des Durchtrittsöffnungsinnenmantels 3' vom Verschlusselement 2 verdrängt. Dieses Material der Durchtrittsöffnungswand 3 wird zum Teil in Eindrückrichtung a des Verschlusselementes 2 verschoben, und sammelt sich in einer ersten Ringwulst 5 in Eindrückrichtung a vor dem Verschlusselement 2. Gleichzeitig fließt aber auch, bedingt durch den plastischen Materialzustand, Material der Durchtrittsöffnungswand 3 entgegen der Eindrückrichtung a hinter das Verschlusselement 2 zurück, und bildet dort eine zweite Ringwulst 6. Während des Eindrückens des Verschlusselementes 2 fließt also Material der Durchtrittsöffnungswand 3 sowohl in Eindrückrichtung a, als auch entgegen der Eindrückrichtung a um das Verschlusselement 2 herum, das dieses Material aufgrund seiner Form verdrängt. Das in dieser Art und Weise verdrängte Material sammelt sich in Eindrückrichtung a vor und hinter dem Verschlusselement 2 und bildet damit die Ringwülste 5 und 6, die über die ursprüngliche und unveränderte Innenwand der Durchtrittsöffnung 4 erhaben sind. Mit anderen Worten stehen die beiden Ringwülste 5, 6 über den unveränderten Durchtrittsöffnungsinnenmantel 3' hervor.

Zwischen den beiden Ringwülsten 5 und 6 entsteht, bedingt durch den größeren Durchmesser d₁ des Verschlusselementes 2 als der Innendurchmesser d₂ der Durchtrittsöffnung 4, eine Aufweitung des Durchmessers d₂ der Durchtrittsöffnung 4. In diesem Bereich liegt der Durchtrittsöffnungsinnenmantel 3' nach dem Eindrücken des Verschlusselementes 2 weiter in Radialrichtung von der zentralen Längsachse der Durchtrittsöffnung 4 entfernt, als vor dem Eindrücken des Verschlusselementes 2. Dieser Bereich, zusammen mit den beiden Ringwülsten 5 und 6, bildet eine Ringnut 7, in der das eingedrückte Verschlusselement 2 gelagert ist und die kreisförmig um die Innenwand der Durchtrittsöffnung 4 verläuft. Die Ringwülste 5 und 6 verkleinern an ihren jeweiligen Positionen den Innendurchmesser d₂ der Durchtrittsöffnung 4. Da der Durchmesser d₁ des Verschlusselementes 2 größer ist als der Innendurchmesser d₂ der Durchtrittsöffnung 4 und auch größer ist als der an den Positionen der Ringwülste 5 und 6 weiter eingeschränkte Innendurchmesser der Durchtrittsöffnung 4, wird das Verschlusselement 2 durch die Nut 7 in der Durchtrittsöffnung 4 fixiert. Dabei liegt die Ringnut 7 unmittelbar am Verschlusselement 2 an. Da sich die Ringnut 7 durch das Eindrücken des Verschlusselementes 2 an diesem selbst gebildet hat, ist die Form der Ringnut 7 an ihrer mit dem Verschlusselement 2 in Kontakt stehenden Fläche perfekt komplementär zu diesem ausgebildet. Mit anderen Worten bildet sich die Ringnut 7 also unmittelbar durch die Wirkverbindung von Verschlusselement 2 und Material der Durchtrittsöffnungswand 3, so dass das Material der Ringnut 7 unmittelbar und ohne Zwischenraum am Verschlusselement 2 anliegt.

Die Kontaktfläche zwischen Ringnut 7 und Verschlusselement 2 ist dabei größer als eine theoretische Kontaktfläche zwischen Durchtrittsöffnungsinnenmantel 3' und Verschlusselement 2, die entstehen würde, wenn man das Verschlusselement 2 ohne Bildung einer Ringnut 7 in die Durchtrittsöffnung 4 eingedrückt hätte. Diese theoretische Fläche entspricht im Ausführungsbeispiel der Figur 1 der radial außenliegenden Oberfläche eines Kugelrings, der entstehen würde, wenn man eine kreisrunde Bohrung mit dem Durchmesser d₂ der Durchtrittsöffnung 4 zentral durch die als Verschlusselement 2 ausgebildete Kugel führen würde. Die Kontaktfläche zwischen Verschlusselement 2 und Ringnut 7 bzw. Verschlusselement 2, den Ringwülsten 5, 6 und der zwischen den Ringwülsten 5, 6 liegenden Aufweitung ist größer als diese theoretische Fläche. Die Ringnut 7 liegt dabei so eng am Verschlusselement 2 an, dass es zu einer Abdichtung der Durchtrittsöffnung 4 kommt.

Sobald der Druck der Presse 8, 17 abgesetzt wird, und somit kein Druck mehr über das Verschlusselement 2 auf die Durchtrittsöffnungswand 3 übertragen wird, verliert das Material der Durchtrittsöffnungswand 3 den plastischen Materialzustand und es kommt zu keiner weiteren plastischen Verformung. Ohne den angelegten Druck der Presse 8, 17 gewinnt die Durchtrittsöffnungswand 3 seinen vorherigen Materialzustand zurück und behält so die Form bei, die es unter Wirkung des Druckes im plastischen Materialzustand angenommen hat. Die erste und zweite Ringwulst 5 und 6, sowie die Aufweitung zwischen den Ringwülsten 5, 6, die zusammen durch das Eindrücken des Verschlusselementes 2 entstanden sind, bleiben bestehen. Durch die Erhabenheit der Ringwülste 5, 6 der Nut 7, wodurch der Durchmesser d₂ der Durchtrittsöffnung 4 sowohl in Eindrückrichtung a vor als auch hinter dem Verschlusselement 2 verringert wird und kleiner ist als der Durchmesser d₁ des Verschlusselementes 2, wird sichergestellt, dass das Verschlusselement 2 in der Lage und an der Stelle verbleibt, an die es von der Presse 8, 17 gedrückt wurde. Die Ringnut 7 verhindert somit, dass das Verschlusselement 2 weiter in die Durchtrittsöffnung 4 oder das angeschlossene Rohr 21 hineinrutscht, bzw. aus der Durchtrittsöffnung 4 heraus in den Sammler zurückfällt. Im weiteren Betrieb des Wärmetauschers wird ein in den Sammler Hineinfallen des Verschlusselementes 2 auch dadurch verhindert, dass im Sammler ein höherer Druck herrscht als in vom Sammler aus gesehen hinter dem Verschlusselement 2 liegenden Rohrinnenraum B des defekten Rohres 21. Dadurch, dass sich die Ringnut 7 durch das Eindrücken des Verschlusselementes 2 direkt am Verschlusselement 2 gebildet hat und formschlüssig an diesem anliegt, kommt es zu einem effektiven Abdichten der Durchtrittsöffnung 4. Das Verschlusselement 2 und die Ringnut 7 liegen so nah aneinander an, dass weder Strömungsmedium noch Dampf in der Lage sind, vom Rohr 21 zum Sammler bzw. vom Sammler zum Rohr 21 an dem Verschlusselement 2 vorbei zu strömen. Das Verschlusselement 2 versperrt also die Durchtrittsöffnung 4 zwischen Sammler und angeschlossenem Rohr 21 effektiv für das Strömungsmedium. Das Eindrücken eines Verschlusselementes 2 erfolgt auf beiden Seiten eines defekten Rohres 21, sowohl auf der Eintritts- als auch auf der Austrittssammlerseite, wodurch ein Dampf- oder Druckverlust über diese Leckage für das Gesamtsystem verhindert wird.

Die Figur 2 zeigt eine Ausführungsform einer Presse 8, die so in einem Sammler vor einer Durchtrittsöffnung 4 positioniert wurde, dass sie durch eine lineare in Eindrückrichtung a gerichtete Druckausübung ein Verschlusselement 2 in die Durchtrittsöffnung 4 eindrücken kann. Wenn die räumlichen Bedingungen des Sammlers dies zulassen, kann dies manuell vorgenommen werden, d.h. der Bediener kann in den Sammler einsteigen und dort das Verschlusselement 2 und die Presse 8 positionieren. Bei nicht ausreichenden Platzverhältnissen kann das Verschlusselement 2 und die Presse 8 auch durch Hilfsvorrichtungen positioniert werden. Die Presse 8 umfasst dabei einen Druckerzeuger 9, der beispielsweise ein Hydraulikzylinder sein kann, der einen Hydraulikdruck von bis zu 700 bar aufbauen kann. Am Druckerzeuger 9 angeordnet ist ein Anschluss 10, z.B. ein hydraulischer Anschluss.

In Einsatzpositionierung, wie in Figur 2 abgebildet, gegenüber der zu verschließenden Durchtrittsöffnung 4 am Druckerzeuger 9 angeordnet befindet sich eine Stütze 11, die eine Anlagefläche 12 aufweist, die komplementär zu der der Durchtrittsöffnung 4 gegenüberliegenden Innenwand des Sammlers geformt ist. Die Anlagefläche 12 weist eine konvexe Rundung auf, die komplementär zu der konkaven Innenfläche des Sammlers ist, die als Gegenlager dient. Auf der der Stütze 11 gegenüberliegenden Seite des Druckerzeugers 9 befindet sich die Druckstange 13, die während der Druckerzeugung aus dem Gehäuse des Druckerzeugers 9 herausgedrückt wird.

An der Druckstange 13 sind im Ausführungsbeispiel der Figur 2 drei Verlängerungsstücke 14 angeordnet. Diese dienen dazu, die Presse 8 so weit zu verlängern, dass der Hubweg der Druckstange 13 ausreicht, um das Verschlusselement 2 in die Durchtrittsöffnung 4 einzudrücken. Mit anderen Worten dienen sie dazu, dass die Presse 8 den Abstand zwischen der zu verschließenden Durchtrittsöffnung 4 und einer der Durchtrittsöffnung 4 gegenüberliegenden Oberfläche überwinden kann. Je nach den Gegebenheiten vor Ort können hier mehr oder weniger Verlängerungsstücke als in der Figur gezeigt an der Presse 8 angeordnet werden.

Weiterhin verfügt die Presse 8 über eine mit einem Wechselhaltersystem ausgestattete Halterung 15, die eine komplementär zum Verschlusselement 2 ausgebildete Aufnahme 16 aufweist. Über das Wechselhaltersystem ist es möglich, verschiedene Halterungen 15, die verschiedene Aufnahmen 16 für verschiedene Verschlusselemente 2 aufweisen, an der Presse 8 anzuordnen. So kann je nach Gegebenheiten vor Ort ein passendes Verschlusselement 2 ausgewählt und eine dazu passende Halterung 15 mit Aufnahme 16 eingesetzt werden.

In Figur 2 ist die Presse 8 und das Verschlusselement 2 schon so positioniert, dass durch eine lineare Druckausübung in Eindrückrichtung a das Verschlusselement 2 nach dem Verfahren in die zu verschließende Durchtrittsöffnung 4 eingedrückt werden kann.

Die Figur 3 zeigt eine weitere Ausführungsform einer Presse 17. Zur Vermeidung von Wiederholungen soll im weiteren nur auf die Unterschiede zur Presse 8 eingegangen werden.

Das Wechselhaltersystem der Halterung 15 der Presse 17 umfasst, wie in Figur 3 dargestellt, eine Feder 18 zur federnden Lagerung der Halterung 15 und einen Anschlag 19 zur Begrenzung des Federweges der Feder 18. Durch die Begrenzung des Federweges durch den Anschlag 19 wird vermieden, dass beim Eindrücken des Verschlusselementes 2 durch den Druckerzeuger 9 in die Durchtrittsöffnung 4 der Druck des Druckerzeugers 9 ungehindert auf die Feder 18 wirkt, und diese dadurch beschädigt wird. Durch die federnde Vorspannung der Halterung 15 kann das Verschlusselement 2 unter der Federspannung an die Innenfläche des Sammlers gedrückt und an dieser entlang geführt werden, so dass es beim Erreichen der zu verschließenden Durchtrittsöffnung 4 zu einer federnden Auslenkung des Verschlusselementes 2 an der Halterung 15 kommt, wodurch ein Bediener feststellen kann, dass die Presse 17 korrekt vor der zu verschließenden Durchtrittsöffnung 4 positioniert ist. Dabei reicht die Spannung der Feder 18 noch nicht aus, um das Verschlusselement 2 weiter in die Durchtrittsöffnung 4 hinein zu drücken, als bis zum Anschlag des Verschlusselementes 2 an den Rändern der Durchtrittsöffnung 4. Diese Auslenkung reicht allerdings aus, um einem Bediener die korrekte Positionierung der Presse 17 vor der zu verschließenden Durchtrittsöffnung anzuzeigen. Die federnde Vorspannung kann nicht nur an der Halterung 15, sondern beispielsweise auch direkt am Verschlusselement 2 angeordnet sein.

Ebenfalls ist am Anschlag 16 der Presse 17 ein Magnet 20 angeordnet, wodurch die Halterung 15 eine Magnetwirkung aufweist, die magnetisch für das Verschlusselement 2 ist, und durch die das Verschlusselement 2 in der Aufnahme 16 gehalten wird.

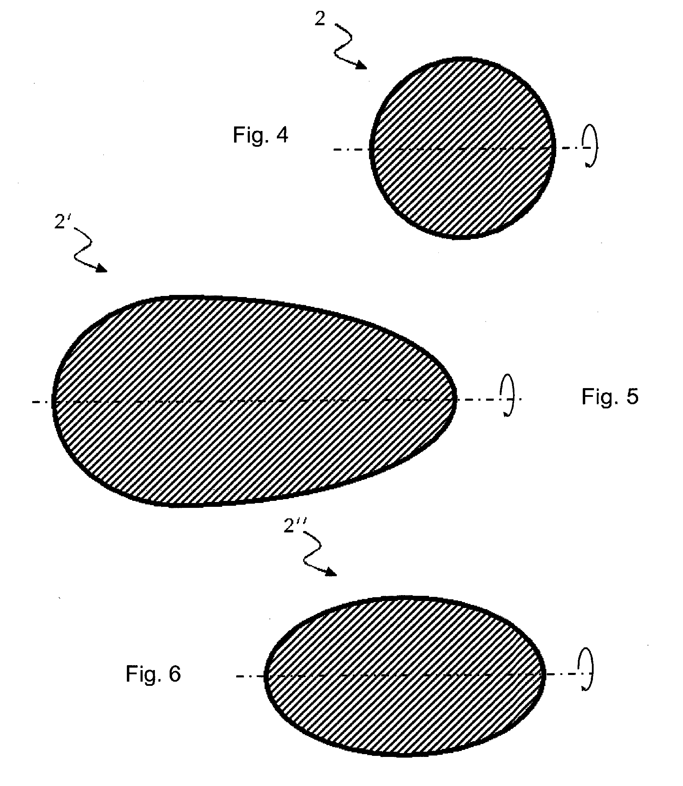

Die Figuren 4, 5 und 6 zeigen jeweils einen Schnitt bzw. Längsschnitt durch Verschlusselemente 2 (kugelförmig), 2' (eiförmig) und 2" (ellipsoid). Ebenso zeigen die Figuren 4, 5 und 6 jeweils eine bzw. die Rotationsachse der jeweiligen Verschlusselemente 2, 2' und 2", die parallel zur Eindrückrichtung a verläuft. Die jeweilige Form der Verschlusselemente 2, 2' und 2" spielt eine wesentliche Rolle bei der plastischen Verformung der Durchtrittsöffnungswand 3, bei der Bildung der Ringwülste 5, 6 und der Ringnut 7. Gerade die Größe der Ringwülste 5, 6 ist durch den jeweiligen Winkel, den die Verschlusselemente 2, 2' und 2" an der Stelle ihres größten Durchmessers d₁ zum Durchtrittsöffnungsinnenmantel 3' bilden, beeinflussbar. Ein kleinerer Winkel resultiert in kleineren Ringwülsten 5, 6, die nicht so weit über den unveränderten Durchtrittsöffnungsinnenmantel 3' hinausstehen, als Ringwülste 5, 6, die bei einem größeren Winkel entstehen. Fig. 5 zeigt ein Verschlusselement 2', bei dem zwei unterschiedliche Winkel eingesetzt werden. Je nachdem, in welcher Richtung entlang der Rotationsachse das Verschlusselement 2' in die Durchtrittsöffnung 4 eingedrückt wird, entstehen vor oder hinter dem Verschlusselement 2' verschieden große Ringwülste 5, 6. So kann durch eine Beeinflussung der Ringwulstbildung eine optimale Abdichtung der Durchtrittsöffnung 4 erreicht werden. Bei Verschlusselementen 2' und 2", bei denen der oben beschriebene Winkel kleiner ist als bei einem kugelförmigen Verschlusselement 2, kann das jeweilige Verschlusselement 2' und 2" tiefer in die Durchtrittsöffnung 4 eingedrückt werden, und immer noch teilweise aus dieser heraus ragen.

## Patentansprüche

1. Verfahren zum Verschluss von Durchtrittsöffnungen (4), die einen Sammler mit Rohren verbinden und durch die ein Strömungsmedium hindurch tritt, umfassend das Eindrücken eines Verschlusselementes (2), dessen größter Durchmesser größer ist als der Innendurchmesser der zu verschließenden Durchtrittsöffnung (4), von außerhalb der Durchtrittsöffnung (4) in den Innenraum der Durchtrittsöffnung (4),
eine druckbedingte plastische Verformung des Wandmaterials der Durchtrittsöffnung (4) um das Verschlusselement (2), die zu einem dichten Formschluss zwischen Verschlusselement (2) und dem Wandmaterial der Durchtrittsöffnung (4) führt,
**dadurch gekennzeichnet,**
**dass** das Verschlusselement (2) an seiner bezüglich der Durchtrittsöffnungsinnenseite (4) gerichteten Seite an der Stelle seines größten Durchmessers eine Rundung aufweist, und
**dass** mindestens ein derartiges Verschlusselement (2) in der Weise in den Innenraum der Durchtrittsöffnung (4) hinein gedrückt wird,
**dass** diese Stelle des größten Durchmessers des Verschlusselementes (2) in das Durchtrittsöffnungsinnere (4) hinein gelangt, und
**dass** die plastische Verformung des Materials am Durchtrittsöffnungsinnenmantel (3') durch den Vorschub des Verschlusselementes (2) entsteht, wobei eine Ringwulst (5, 6) in Eindrückrichtung vor dem Verschlusselement (2) gebildet wird, und ferner plastisch verformtes Material entgegen der Eindrückrichtung zurück fließt und eine Ringwulst (5, 6) auf der. entgegen der Eindrückrichtung gelegenen Seite des Verschlusselements (2) gebildet wird, wodurch insgesamt eine Ringnut (7) entsteht, die das Verschlusselement (2) in der Durchtrittsöffnung (4) fixiert.

2. Verfahren nach Anspruch 1,
**dadurch gekennzeichnet,**
**dass** eine zu verschließende Durchtrittsöffnung (4) detektiert wird, indem das Verschlusselement (2) federnd vorgespannt an einer Innenfläche des Sammlers (A) entlang geführt wird bis es bei Erreichen der Durchtrittsöffnung (4) federnd ausgelenkt wird.

3. Verfahren nach Anspruch 1 oder 2,
**dadurch gekennzeichnet,**
**dass** das Verschlusselement (2) nur so weit in die Durchtrittsöffnung (4) eingedrückt wird, dass es noch teilweise aus dieser übersteht, so dass es aus einem Blickwinkel orthogonal zur Eindrückrichtung leicht gesichtet werden kann.

4. Verfahren nach einem der Ansprüche 1 bis 3,
**dadurch gekennzeichnet,**
**dass** mehr als ein Verschlusselement (2) in die zu verschließende Durchtrittsöffnung (4) eingedrückt wird, wobei die Verschlusselemente (2) in Eindrückrichtung hintereinander angeordnet werden.

5. Verschlusselement (2) zur Durchführung des Verfahrens nach einem der Ansprüche 1 bis 4, **dadurch gekennzeichnet,**
**dass** es rotationssymmetrisch ist.

6. Verschlusselement (2) nach Anspruch 5,
**dadurch gekennzeichnet,**
**dass** das Verhältnis des Durchmessers des Verschlusselementes (2) zum Durchmesser der Durchtrittsöffnung (4) zwischen 1,033 und 1,125, vorzugsweise zwischen 1,045 und 1,083 liegt.

7. Verschlusselement (2) nach Anspruch 5 oder 6,
**dadurch gekennzeichnet,**
**dass** es eine Form aufweist, durch die es sich in der Durchtrittsöffnung (4) selbst zentriert.

8. Verschlusselement (2) nach einem der Ansprüche 5 bis 7,
**dadurch gekennzeichnet,**
**dass** es entweder kugelförmig, eiförmig oder ellipsoid ist.

9. Verschlusselement (2) nach einem der Ansprüche 5 bis 8,
**dadurch gekennzeichnet,**
**dass** es die gleiche Härte besitzt wie das Wandmaterial der Durchtrittsöffnung (4) oder härter als dieses ist.

10. Verschlusselement (2) nach einem der Ansprüche 5 bis 9,
**dadurch gekennzeichnet,**
**dass** es magnetisch zu einer Aufnahme einer Halterung an einer Presse (8, 17) ist und so an dieser gehalten wird.

11. Presse (8, 17) zum Eindrücken von Verschlusselementen (2) in Durchtrittsöffnungen (4) gemäß dem Verfahren nach einem der Ansprüche 1 bis 4,
**dadurch gekennzeichnet,**
**dass** sie eine Auflagefläche an einer Stütze umfasst, die gegenüber der Halterung mit der Aufnahme für das Verschlusselement (2) liegt und die eine konvexe Rundung aufweist, die komplementär zu der konkaven Innenfläche des Sammlers (A) ist, die als Gegenlager dient.

12. Presse (8, 17) nach Anspruch 11,
**dadurch gekennzeichnet,**
**dass** sie durch Anordnung von Verlängerungsstücken (14) verlängerbar ist um den Abstand zwischen der zu verschließenden Durchtrittsöffnung (4) und einer der Durchtrittsöffnung (4) gegenüberliegenden Oberfläche zu überwinden.

13. Presse (8, 17) nach Anspruch 11 oder 12,
**dadurch** h **gekennzeichnet;**
dass sie über einen Wechselhalter verfügt, an dem die Halterung mit der Aufnahme für das Verschlusselement (2) austauschbar angeordnet ist, so dass Halterungen mit unterschiedlichen Aufnahmen für verschiedene Größen des Verschlusselements (2) an der Presse (8, 17) angebracht werden können.

14. Presse (8, 17) nach einem der Ansprüche 11 bis 13,
**dadurch gekennzeichnet,**
**dass** sie eine federnde Lagerung für das Verschlusselement (2) aufweist, die über einen Anschlag verfügt, der einen vorgegebenen Federweg begrenzt.

15. Presse (8, 17) nach einem der Ansprüche 11 bis 14,
**dadurch gekennzeichnet,**
**dass** sie eine für das Verschlusselement (2) magnetisch wirkende Halterung (15) aufweist, durch die das Verschlusselement (2) in der Aufnahme gehalten wird.
